# EUROPEAN PATENT SPECIFICATION

(11) **EP 2 020 842 B1**
(45) Date of publication and mention of the grant of the patent: **22.09.2010**
(21) Application number: 07725611.3
(22) Date of filing: 28.05.2007
(51) Int. Cl.: A01F 15/00, A01F 15/10

(54) **AGRICULTURAL MACHINE FOR COLLECTING AND BUNDLING VINE BRANCHES**
LANDWIRTSCHAFTLICHE MASCHINE ZUM AUFSAMMELN UND BÜNDELN VON WEINZWEIGEN
MACHINE AGRICOLE POUR RAMASSER ET FAGOTER LES SARMENTS DE VIGNE

(30) Priority: 30.05.2006 IT VI20060164
(43) Date of publication of application: 11.02.2009
(73) Proprietor: Bonamini, Claudio, 37030 Colognola Ai Colli (IT)
(72) Inventor: Bonamini, Claudio, 37030 Colognola Ai Colli (IT)
(74) Representative: Bettello, Pietro
(86) International application number: PCT/EP2007/004716
(87) International publication number: WO 2007/137803

(56) References cited:
- EP-A- 1 029 441
- DE-A1- 3 004 431
- FR-A- 2 520 971
- FR-A- 2 637 454
- FR-A1- 2 506 117

## Description

The present finding concerns an agricultural machine for collecting and bundling vine branches.

It is known that the term vine branches refers to the branches formed from the pruning of creeping plants, in particular of grapevines; it is generally carried out in autumn after the grape harvest, in order to make the reproductive cycle of the grapevines easier for the following year. The amount of branches that are obtained (which can reach about 30 quintals per hectare) is quite considerable, but the vine branches have a rather irregular and twisted configuration and therefore are not very good for being collected in an ordered manner in a room even if it is spacious. In fact, the vine branches could be usefully burnt in a domestic heating installation but, precisely due to their particular configuration, it is difficult to insert them into the mouth of a furnace, fireplace or similar. of course, the vine branches could be manually reduced into suitable shapes and sizes to undergo this treatment, but a substantial workforce would be needed and therefore it would also be uneconomic. Therefore, in general, the vine branches are simply ground up and then left on the land, but this often ends up with the creation of mould, above all during particularly humid winters (as is, moreover, the typical case of wine-producing areas of northern Italy), which is likely to be very harmful to a valuable harvest like grapes.

In order to try to avoid these drawbacks a machine has been devised and commercialised (see WO-A-2006/040783) that is easy to tow, which allows the vine branches that have been collected from the land beforehand to be packaged. Unfortunately, the packages of vine branches thus obtained are particularly voluminous and therefore they can only be stacked next to one another, but they absolutely cannot be used for direct insertion into the mouth of a common furnace or similar. In practice, such packaged vine branches must be manually cut in advance to be used and this has constituted a substantial obstacle to the effective spread of the aforementioned machines.

EP-A-1029441 discloses a baling machine for pruning residues having collecting rollers rotating in a direction opposite to the direction of travel of the machine.

The purpose of the present finding is to provide an agricultural machine for collecting and bundling vine branches, which is able to form bundles that are particularly small and in any case such as to be able to be directly used as fuel to be inserted into the mouth of a normal furnace, fireplace or similar. The whole thing must be obtained through a machine that is intrinsically simple both in terms of construction and functionality. In practice, such a machine must be easy to use even for a person without any particular expertise and in any case that is not necessarily an agricultural worker.

Moreover, the machine according to the finding must be able to compress the vine branches, after they have been collected, without however breaking them up, so as not to create waste that would then have to be collected manually, with all of the consequences that this would entail.

Finally, the machine according to the finding must also be easy to transport, as well as able to be motorised.

This is obtained, according to the finding, by foreseeing a machine according to claim 1, which is equipped with means that allow it to be towed, for example by a tractor, inside of which there are, in succession, three rollers arranged with their axis transversal with respect to the direction of movement of the machine.

The vine branches are collected from the land through a collecting roller, which rotates in the opposite direction to the direction of travel; said roller, in its surface, comprises two Archimedean screws converging towards the mouth of the machine body.

Said vine branches are then sent to a second toothed roller, which picks them up and sends them to a third conveying roller. The latter has a spiral, which, according to the invention, in turn conveys the branches towards a toothed area, which in turn takes care of delivering them into a funnel-shaped area, defined on the sides by two rollers equipped with a spiral on their surface, which rotate in the same direction, so that the vine branches enter from the widest part of said funnel and come out at its narrowest part. During the journey in this funnel-shaped area it is foreseen that a wire or a net be wound around the vine branches so as to tie them together. The rotary movement of the two side rollers ensures that the vine branches are tied and pulled towards the end of the cone.

At the outlet of the funnel-shaped area a suitable cutting machine take cares of cutting the vine branches and the wire, which allows the compact and uncrushed "logs" (indicatively 20 cm long and 15 cm in diameter) to be obtained, which, by rolling, will then collect in the filling tank of the machine.

It is possible to foresee a further tying station after the vine branches have been cut.

These and other characteristics of the finding shall now be described in detail, with reference to two particular embodiments thereof, given as non-limiting examples, with the help of the attached tables of drawings, where:
fig. 1 illustrates a longitudinal section view of the device according to the finding, in a first preferred embodiment thereof;
fig. 2 illustrates a schematic plan view from above of the aforementioned device;
fig. 3 illustrates a front view of the aforementioned device;
figs. 4 to 6 illustrate three views corresponding to the previous ones of the device according to the finding, in a second preferred embodiment thereof;
fig. 7 illustrates a cross section view of a preferred embodiment of one of the rollers present in the device according to the finding.

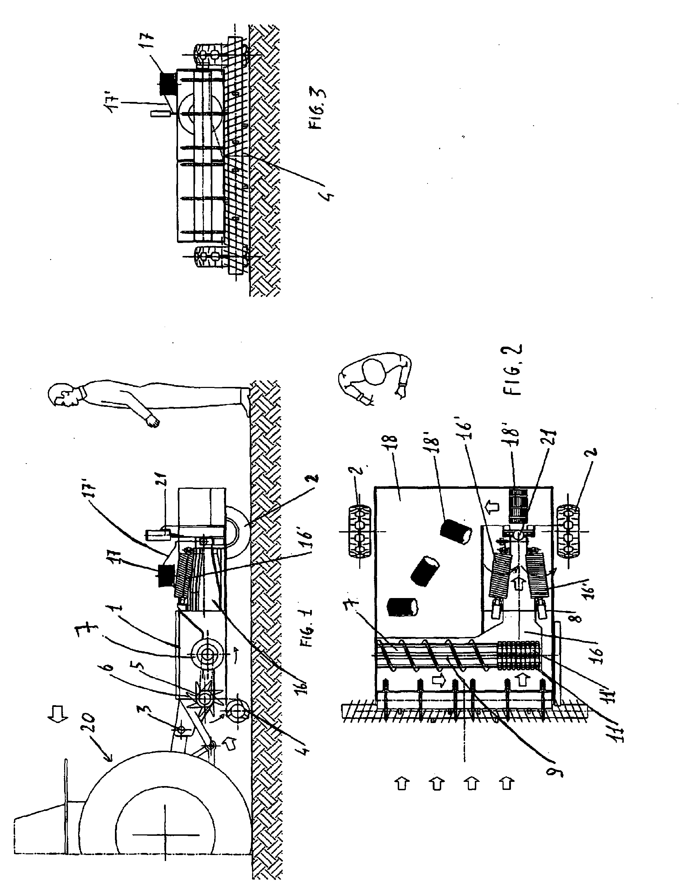

As can be seen in figs. 1 and 2, the machine according to the finding comprises a support framework 1, which sits on the ground through a pair of wheels 2; at the front part of said structure there is a hooking element 3 (fig. 1), which allows it to be towed by a tractor (20) or another vehicle.

In per se known ways, the hooking element 3 also acts as a lifter of the entire machine for its road transportation, whereas, in the operative step, the machine shall sit on the ground through wheels 2, as well as through a first roller 4 equipped with Archimedean screws converging towards the central part of the machine, which rotates in the opposite direction to the direction of travel, thus lifting the wood.

The vine branches thus collected are passed to a second roller 5, equipped with teeth 6.

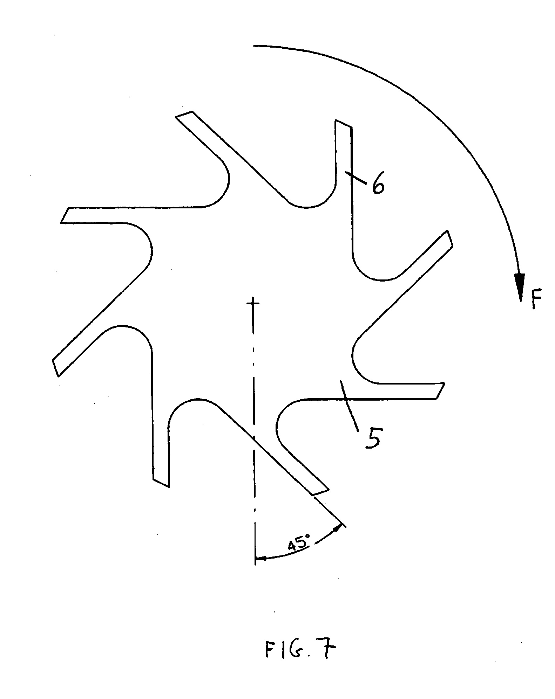

As can be seen in fig. 7 the roller 5 advantageously has specially shaped and configured teeth 6. in particular, these teeth shall have a direction inclined by about 45° with respect to the radial direction; moreover, between each of the teeth and the next one a concave area 6' is formed; the direction of rotation of the roller 5 is also indicated in the figure with the arrow F.

This second roller makes the vine branches advance towards the third roller 7 that, just like the second roller 5, is hinged, at its ends, to the lateral sides 8 of the machine. The third roller 7 has a first portion 9, equipped with a spiral 10, suitable for conveying the vine branches at its second portion 11, which is, vice-versa, equipped with teeth 11', suitable for "squashing the vine branches", also making them advance.

Downstream of this third roller the vine branches are conveyed into a funnel-shaped structure, laterally defined by a pair of rollers 16', equipped with an Archimedean screw in their surface, with axes converging in relation to the direction of treatment of the vine branches inside the machine; said two rollers rotate in the same direction and make the vine branches advance towards the outlet part of the machine.

As can be seen from figs. 1 and 3, above this funnel-shaped area there is a reel 17, about which wire 17' is wound, through which the vine branches shall be tied together forming bundles. The rotary movement of the rollers 16' ensures that the vine branches advance and, at the same time, ties them together. The tying together shall be obtained through a wire like in the figure, or else through a self-locking winding net, in any case with *per se* known methods.

At the outlet of the funnel-shaped area there is a cutting machine 21, which take cares of cutting the vine branches compacted into "logs" and the wire; the "logs" 18' thus obtained will then collect in the filling tank 18 of the machine.

Advantageously, the actuation of the tying device and of the cutting machine 21, as well as of the rollers 16' shall be carried out through a hydraulic motor, not represented for the sake of simplicity.

From the above it can thus be seen how through the device according to the finding it is particularly easy for the user to obtain "logs" formed from vine branches that are immediately ready to be burnt or, alternatively, to be stored. Moreover, the machine according to the finding can immediately be used by the operator by simply towing it with a tractor.

Moreover, the vine branches thus "bundled" are easy to be dried out in the normal way, as they are logs of wood, which is not the case with ground vine branches, which tend to fill with humidity.

it should be noted that the machine according to the finding can also be used to collect loose branches coming from the harvesting of pears, apples and other fruit plants.

In the case of use of a tractor, the movement of the various transversal rollers present in the machine can also advantageously be obtained through Hooke's joints and the like, which obtain their movement from the tapping of force of the tractor itself, with *per se* known methods.

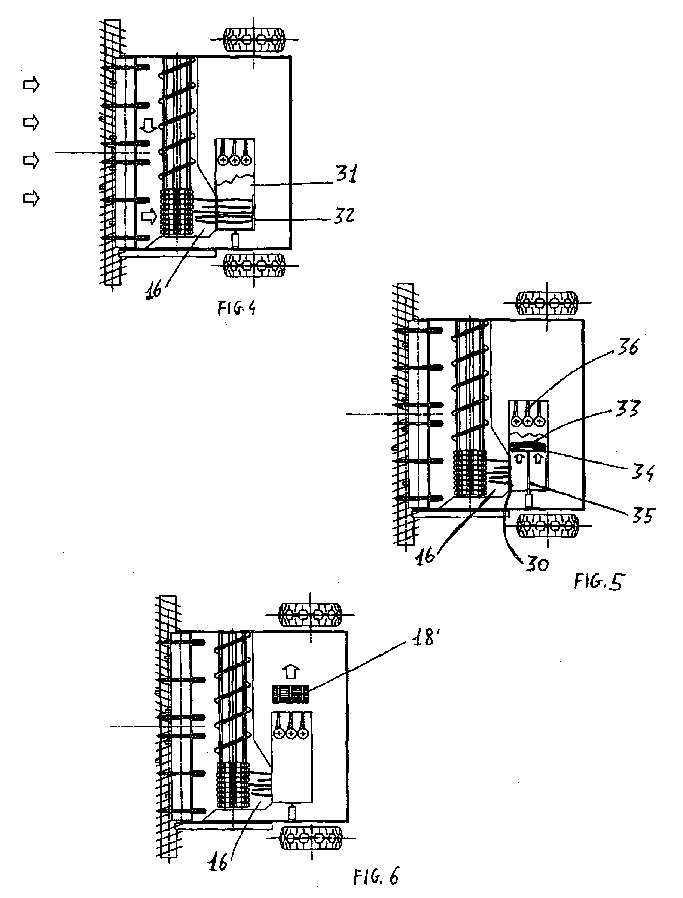

According to another embodiment of the finding, illustrated in figs. 4 to 6, it is foreseen that the vine branches, after the funnel-shaped area 16, be conveyed to a container 31, at the inlet to which there is a guillotine 30; the vine branches, having penetrated by a predetermined length (for example up to the opposite end 32 to the one where the guillotine 30 is located, of the tank 31) are cut by said guillotine, thus having a substantially constant length. Then, automatically, the cut vine branches 33 are pushed inside the tank by an arm 34, moved by a piston 35, in turn advantageously moved by hydraulic means. At the end part of the tank 33 there is a tying machine using net or wire 36, which will take care of tying and packing the vine branches, in this case also making a log 18' like in the first embodiment of the finding.

Advantageously, in the device according to the finding it is foreseen that the rollers in which the Archimedean screws are located do not operate at their entire circumferential extension, but rather just at a portion of said extension. To achieve this result, close to said rollers there are foils arranged parallel to the axis of the roller that avoid the vine branches being able to go beyond the operative limit foreseen in each of said rollers.

## Claims

1. AGRICULTURAL MACHINE FOR COLLECTING AND BUNDLING VINE BRANCHES, which has a support framework (1), which sits on the ground through wheels (2) or similar and that has hooking means (3) to a tractor (20), of the type equipped with a lifting device, said machine being **characterised in that** it has, at the front part of the framework, in relation to the normal direction of travel of the machine, a first collecting roller (4) rotating in the opposite direction to the direction of travel of the machine, which has a pair of Archimedean screws converging at the mouth of the machine body, the vine branches then being sent to a second toothed roller (5), which in turn takes care of sending the vine branches to a third roller (7), which has a first portion (9) equipped with a spiral (10) and a second portion (11) equipped with teeth (11') to squash the vine branches and move them forwards, with it being foreseen that the first roller (4) rotates in the opposite direction to the direction of travel, whereas the other two rollers (5) and (7) rotate in the same direction as the direction of travel of the machine, all three rollers being arranged with their axis transversal with respect to the direction of travel of the machine;
downstream of the three rollers a funnel-shaped area (16) being foreseen that conveys the vine branches to means capable of compacting and cutting the vine branches to the desired length and then tying them into bundles, so as to be able to easily use them in a common furnace or to be easily stored.

2. MACHINE, according to claim 1, **characterised in that** downstream of the funnel-shaped area (16), laterally defined by a pair of rollers (16') with converging axis, said two rollers rotating in the same direction and causing the vine branches to rotate and advance, there are means for tying the vine branches in bundles and there is also a cutting machine (21), arranged at the end of the funnel-shaped area (16), suitable for cutting the vine branches to the desired length.

3. MACHINE, according to claim 1, **characterised in that** downstream of the funnel-shaped area (16) there is a parallelepiped container (31), at the inlet to which there is a guillotine (32), with means being foreseen suitable for cutting the vine branches to a constant length, as well as an arm (34) that, pushed by a plunger (35), moves the cut vine branches to a device located in said container (31), which takes care of compressing and packaging the vine branches, which are then subjected to the action of a tying device (36) using wire or net, which shall take care of tying them up.

4. MACHINE, according to claim 2 or 3, **characterised in that** the second roller (5) has teeth (6) having a direction inclined by about 45° with respect to the radial direction, with there being a concave area (6') between each of the teeth and the next one.

5. MACHINE, according to claim 2 or 3, **characterised in that** the mechanical feed for the three rollers (4, 5, 7) is obtained from the towing tractor (20) of the machine itself or from one or more hydraulic motors.

6. MACHINE, according to claim 2 or 3, **characterised in that** the mechanical feed for the means for tying and cutting the vine branches is obtained through one or more hydraulic motors.

7. MACHINE, according to claim 2, **characterised in that** the tying into bundles of the vine branches is carried out through a wire (17') taken from a reel (17), arranged above the funnel-shaped area (16).

8. MACHINE, according to claim 2 or 3, **characterised in that** the tying into bundles of the vine branches is carried out through a net, which wraps around the aforementioned bundles.

9. MACHINE, according to claim 1, **characterised in that** close to the rollers in which the Archimedean screws are located there are plates parallel to the axis of the roller, which prevent the vine branches passing beyond the plates themselves, all in order to make the Archimedean screws operate just at a portion of their circumferential extension.

## Patentansprüche

1. Landwirtschaftliche Maschine, insbesondere zum Aufsammeln und Bündeln von Weinzweigen, mit einem Stützrahmen (1), welche über Räder (2) oder dergleichen auf dem Boden steht, und mit Mitteln zum Ankoppeln an einen Traktor (20) eines Typs, der mit einer Hebevorrichtung ausgerüstet ist, wobei die Maschine **dadurch gekennzeichnet ist, dass** sie an der Vorderseite des Stützrahmens in Bezug auf die normale Bewegungsrichtung der Maschine eine erste Sammelwalze (4) aufweist, die in Gegenrichtung zur Bewegungsrichtung der Maschine rotiert und die ein Paar Schneckenförderer aufweist, die an der Öffnung des Maschinenkorpus zusammenlaufen, wobei die Weinzweige dann zu einer zweiten, gezahnten Walze (5) weitergeleitet werden, die wiederum dafür zuständig ist, die Weinzweige zu einer dritten Walze (7) weiterzuleiten, welche einen ersten, mit einer Spirale (10) versehenen Abschnitt (9) und einen zweiten, mit Zähnen (11') versehenen Abschnitt (11) aufweist, um die Weinzweige zu zerdrücken und nach vorwärts zu bewegen, wobei vorgesehen ist, dass die erste Walze (4) in der Richtung entgegengesetzt zur Bewegungsrichtung rotiert, während die beiden anderen Walzen (5) und (7) in derselben Richtung wie die Bewegungsrichtung der Maschine rotieren, wobei alle drei Walzen mit ihren Achsen quer zur Bewegungsrichtung der Maschine angeordnet sind, wobei den drei Walzen nachgeschaltet ein trichterförmiger Bereich (16) vorgesehen ist, der die Weinzweige zu Mitteln transportiert, die in der Lage sind, die Weinzweige zu verdichten und auf die gewünschte Länge zu zerkleinern und dann in Bündel zu binden, so dass sie leicht in einem übliche Ofen verwendet oder leicht gelagert werden können.

2. Maschine nach Anspruch 1, **dadurch gekennzeichnet, dass** nachgeschaltet dem trichterförmigen Bereich (16), der seitlich durch ein Paar Walzen (16') mit konvergierenden Achsen definiert wird, wobei die beiden Walzen in derselben Richtung rotieren und bewirken, dass sich die Weinzweige drehen und nach vorn geschoben werden, Mittel zum Binden der Weinzweige in Bündel vorgesehen sind sowie weiterhin ein am Ende des trichterförmigen Bereichs (16) angeordneter Zerkleinerer (21) geeignet zum Zerkleinern der Weinzweige auf die gewünschte Länge.

3. Maschine nach Anspruch 1, **dadurch gekennzeichnet, dass** nachgeschalte dem trichterförmigen Bereich (16) ein quaderförmiger Behälter (31) vorhanden ist, an dessen Einlass eine Schneidemaschine (32) vorhanden ist, mit Mitteln, die dazu vorgesehen sind, die Weinzweige auf eine konstante Länge zu schneiden, sowie ein Arm (34), der, von einem Kolben angetrieben, die geschnittenen Weinzweige zu einer in dem Behälter (31) angeordneten Vorrichtung bewegt, welche dafür zuständig ist, die Weinzweige zu komprimieren und abzupacken, die danach der Aktion einer Bindevorrichtung (36) mittels Draht oder Netz unterzogen werden, die dafür zuständig ist, sie zu binden.

4. Maschine nach Anspruch 2 oder 3, **dadurch gekennzeichnet, dass** die zweite Walze (5) Zähne (6) aufweist, die in eine gegenüber der Radialrichtung um etwa 45° geneigte Richtung weisen, wobei zwischen jedem Zahn und dem nächsten ein konkaver Bereich (6') vorhanden ist.

5. Maschine nach Anspruch 2 oder 3, **dadurch gekennzeichnet, dass** der mechanische Vorschub für die drei Walzen (4, 5, 7) von dem ziehenden Traktor (20) der Maschine selbst oder von einem oder mehreren hydraulischen Motoren stammt.

6. Maschine nach Anspruch 2 oder 3, **dadurch gekennzeichnet, dass** der mechanische Vorschub für die Kittel zum Binden und Schneiden der Weinzweige von einem oder mehreren hydraulischen Motoren stammt.

7. Maschine nach Anspruch 2, **dadurch gekennzeichnet, dass** das Binden der Weinzweige in Bündel über ein Kabel (17') erfolgt, das von einer Spule (17) stammt, die oberhalb des trichterförmigen Bereichs (16) angeordnet ist.

8. Maschine Anspruch 2 oder 3, **dadurch gekennzeichnet, dass** der das Binden der Weinzweige in Bündel über ein Netz erfolgt, das um die genannten Bündel herumgewickelt wird.

9. Maschine nach Anspruch 1, **dadurch gekennzeichnet, dass** nahe den Walzen, in welchen die Schneckenförderer angeordnet sind, Platten parallel zur Achse der Walze vorhanden sind, welche verhindern, dass die Weinzweige weiter als die Platten selbst gelangen, um die Schneckenförderer bei nur einem Teil ihrer umfänglichen Ausdehnung arbeiten zu lassen.

## Revendications

1. Machine agricole pour récolter et javeloter des pampres, qui a un châssis de support (1), qui s'assoit sur le sol par le biais de roues (2) ou similaires et qui a des moyens d'accrochage (3) à un tracteur (20), du type équipé d'un dispositif de levage, ladite machine étant **caractérisée en ce qu'**elle a, au niveau de la partie avant du châssis, par rapport à la direction normale de déplacement de la machine, un premier rouleau de collecte (4) tournant dans la direction opposée à la direction de déplacement de la machine, qui a une paire de vis d'Archimède convergeant au niveau de l'embouchure du corps de la machine, les pampres étant ensuite envoyés à un second rouleau denté (5), qui se charge à son tour d'envoyer les pampres vers un troisième rouleau (7), qui a une première partie (9) équipée d'une spirale (10) et une seconde partie (11) équipée de dents (11') pour écraser les pampres et les faire avancer, avec cela il est prévu que le premier rouleau (4) tourne dans la direction opposée à la direction de déplacement, tandis que les deux autres rouleaux (5) et (7) tournent dans la même direction que la direction de déplacement de la machine, tous les trois rouleaux étant agencés avec leur axe transversal par rapport à la direction de déplacement de la machine ;
en aval des trois rouleaux, est prévue une zone en forme d'entonnoir (16) qui transporte les pampres à des moyens capables de compacter et de couper les pampres à la langueur souhaitée et de les nouer ensuite en paquet, en vue de pouvoir les utiliser facilement dans un four classique ou de les stocker facilement.

2. Machine selon la revendication 1, **caractérisée en ce qu'**en aval de la zone en forme d'entonnoir (16), latéralement définie par une paire de rouleaux (16') avec un axe convergent, lesdits deux rouleaux tournant dans la même direction et amenant les pampres à tourner et à avancer, se trouvent des moyens pour nouer les pampres en paquet et on trouve également une machine de coupe (211), agencée à l'extrémité de la zone en forme d'entonnoir (16), convenant pour couper les pampres à la longueur souhaitée.

3. Machine salon la revendication 1, **caractérisée en ce qu'**en aval de la zone en forme d'entonnoir (16), se trouve un conteneur parallélépipède (31), à l'entrée duquel se trouve une guillotine (32), où sont prévus des moyens convenant pour couper les pampres à une longueur constante, ainsi qu'un bras (34) qui, poussé par un piston plongeur (35), déplace les pampres coupés jusqu'à un dispositif positionné dans ledit conteneur (31), qui prend soin de comprimer et d'emballer les pampres, qui sont ensuite soumis à l'action d'un dispositif de nouage (36) à l'aide d'un fil ou d'un filet, qui se charge de les nouer.

4. Machine selon la revendication 2 ou 3, **caractérisée en ce que** le second rouleau (5) a des dents (6) ayant une direction inclinée à environ 45° par rapport à la direction radiale, conjointement à zone concave (6') entre chacune des dents et la suivante.

5. Machine selon la revendication 2 ou 3, **caractérisée en ce que** l'alimentation mécanique pour les trois rouleaux (4, 5, 7) est obtenue à partir d'un tracteur de halage (20) de la machine elle-même ou à partir d'un ou de plusieurs moteurs hydrauliques.

6. Machine selon la revendication 2 ou 3, **caractérisée en ce que** l'alimentation mécanique pour les moyens permettant de nouer et de couper les pampres est obtenue par un ou plusieurs moteurs hydrauliques.

7. Machine selon la revendication 2, **caractérisée en ce que** le nouage en paquet des pampres est réalisé avec un fil (17') tiré d'une bobine (17), agencée au-dessus de la zone en forme d'entonnoir (16).

8. Machine selon la revendication 2 ou 3, **caractérisée en ce que** le nouage en paquet des pampres est réalisé à l'aide d'un filet, qui s'enroule autour des paquets susmentionnés.

9. Machine selon la revendication 1, **caractérisée en ce qu'**à proximité des rouleaux dans lesquels les vis d'Archimède sont positionnées, on trouve des plaques parallèles à l'axe du rouleau, qui empêchent les pampres de passer au-delà des plaques elles-mêmes, tout cela afin de permettre aux vis d'Archimède de fonctionner juste au niveau d'une partie de leur extension circonférentielle.
